# EUROPEAN PATENT APPLICATION

(11) **EP 2 803 777 A1**
(43) Date of publication of application: **19.11.2014**
(21) Application number: 14164265.2
(22) Date of filing: 10.04.2014
(51) Int. Cl.: E04B 2/86, E04B 5/36, E04B 5/48, F24D 3/12

(54) **A formwork for pouring concrete floors or walls**

(30) Priority: 11.04.2013 IT MI20130137 U
(71) Applicant: Baranzelli, Gianpietro, 6807 Taverne (CH)
(72) Inventor: Baranzelli, Gianpietro, 6807 Taverne (CH)
(74) Representative: Zardi, Marco

(57) **Abstract**

The invention relates to a radiating modular formwork (10) for pouring reinforced-concrete floors or walls, comprising a base panel (2), a weight-reducing structure (3, 4) and a radiating element (5, 6) inside the base, which can be connected to an external circuit for supplying a heating or cooling fluid, thus forming a radiating floor or wall.

## Description

### Field of application

The invention relates to the building sector and, more precisely, concerns a formwork for pouring floors or walls.

### Prior art

A formwork (or shuttering) is, as is known, a structure for containing a concrete casting and is widely used in the building sector to construct reinforced-concrete articles, in particular floors and walls.

The main systems for the construction of floors comprise: concrete slab flooring, prefabricated flooring of the Predalles type; mixed flooring consisting of brickwork with joists and hollow floor bricks.

A concrete slab flooring is formed essentially by a first shoring with a section-dividing function on which the concrete-retaining boards are arranged. The reinforcing ironwork is then arranged in position and finally the concrete casting which usually has a thickness of about 25 cm is performed. This system offers good results, but has the disadvantage of a high cost, both as regards the installation time, which is relatively long, and because it requires considerable quantities of concrete and reinforcing iron.

The Predalles type flooring is made using prefabricated flat slabs; it has the advantage of a surface on the inner side which is already finished and ready to be painted, but it has the defect of the joining joints between panels which remain visible and adversely affect its appearance. For this reason, it is considered to be unsuitable for living premises and in fact is mainly used for garages, cellars, etc. The prefabricated slabs are relatively inexpensive, but this advantage is partly offset by the costs for handling and installation, which requires the use of equipment such as that used for a conventional prefabricated component.

The "mixed" flooring comprises reinforced-concrete ribs (called beams or joists) which are formed in situ or prefabricated, and weight-reducing elements (hollow floor bricks) consisting of brickwork, or in certain cases, of expanded material. The concrete casting forms a slab above the weight-reducing elements. The advantage of this system, which is widely used, consists essentially in the use of prefabricated joists. For this reason, it may be considered to be a "semi-prefabrication system". This system, however, has the disadvantage of more complex installation work, compared to the technique of casting in situ, owing to the positioning of the hollow floor bricks. It also has a drawback which consists in the phenomenon of separation or detachment of the inner side of the weight-reducing elements.

As regards, instead, the construction of walls, in the prior art the following techniques are principally used: heat-insulating concrete wall with external cladding; heat-insulating brickwork wall with external cladding; insulating brickwork wall.

In the first case the concrete wall is normally made using formworks which may be reutilized, so as to keep costs down. The heat insulation is provided by sheets of insulating material which are subsequently applied to the outside of the wall (insulating cladding) and fixed thereto mechanically. It is a system which is little used since it is costly and slow to install owing to the handling of the formwork. The brickwork wall with external heat insulation is the most used system, but it also requires the application of cladding-like sheets of insulating material, thus obliging the construction company to use specialized personnel for the wall finishing operation, increasing costs. The insulating brickwork wall has the drawback of requiring increasingly greater thicknesses (even up to about 50 cm) in order to comply with the heat insulation regulations; the increasing thickness of the wall obviously results in an increase in the weight and costs and reduces the living area.

For these reasons, the known systems for the construction of walls and floors are not entirely satisfactory and there is an incentive to propose a system which is able to reduce the cost of labour, the weight and the amount of material used, all of which without the need for highly specialized labour. At the same time, the system must be adaptable to the requirements of the construction companies.

There is also an increasingly pressing need to provide low-temperature heating systems as an alternative to conventional radiators supplied with hot water.

Hot-water radiators, as is known, are not very efficient from an energy point of view. They require heat at a relatively high temperature (typically about 80°C) which is more difficult to produce and distribute; they do not manage to heat in a uniform manner which results in a limited sensation of heating comfort, and occupy space in the rooms, constituting a constraint with regard to interior furnishing; moreover, they only perform a heating function and, for summer air-conditioning, it is necessary to have a separate air-conditioning plant which, as is known, consumes a lot of energy.

Attempts have been made to overcome these drawbacks with low-temperature floor heating systems which normally have a distinctly lower operating temperature (usually 30-40 °C). These systems are more efficient from a theoretical point of view, but have a number of drawbacks which limit their widespread use: they increase the thickness of the floor (concrete covering layer), reducing the volume of the room; they generate convective currents and favour the circulation of dust, which may not be tolerated by certain people; their efficiency is reduced by the furniture which covers part of the radiating surface and absorbs some of the heat. For these reasons the spread of such floor systems has hitherto been limited.

Ceiling radiating systems are also known, which however are based on the use of a false ceiling or modules for example made of plasterboard, these being hung from the actual ceiling, and therefore also occupying a useful volume and not always being practical to install. Said ceiling radiating systems are applied to commercial and/or large-size buildings (e.g. warehouses) where a false ceiling is provided with panels for the service facilities (wiring, air conditioning, etc.); they are, however, unsuitable for the home construction sector.

### Summary of the invention

The present invention aims to provide an improved formwork for the construction of floors and walls, so as to overcome the limitations and the drawbacks of the prior art, as discussed above.

The underlying idea of the invention is to provide a radiating formwork which incorporates internally a radiating element such as a coil. The radiating formwork may be used for the casting of floors or walls or as an underfloor slab for forming a radiating floor.

The objects of the invention are achieved with a modular formwork, in particular for pouring reinforced-concrete floors or walls according to the accompanying claim 1, comprising:
- a base formed as a panel;
- at least one weight-reducing portion which extends from the outer side of said panel-like base and extends longitudinally along the formwork;
- and wherein the panel-like base comprises internally at least one fluid-circulation radiating element which can be connected to a circuit for supplying a heating or cooling fluid.

The base of the formwork preferably has the form of a flat sheet, namely it has a length and width which are greater than its thickness. Said base is preferably made of lightened and reinforced concrete, but may also be made of polystyrene, wood fibre or other suitable materials. If lightened concrete is used, it preferably has a weight not greater than 600 kg/m³.

Preferably, the formwork is made so as to have an approximate overall weight of 12 kg/m².

The weight-reducing structure which extends from the base reduces the volume of covering concrete, concentrating it where it is most needed; in particular, the longitudinal weight-reducing elements define channels which, upon receiving the cast material, will form joists able to withstand the design loads. In a preferred embodiment, the formwork comprises longitudinal elements with a rectangular or square cross-section; said elements may be identical to each other or different. Advantageously said weight-reducing elements are made of expanded polystyrene (EPS).

The base of the formwork has advantageously lateral joining means, allowing the formworks to be arranged correctly next to each other. For example, in a preferred embodiment, the flanks of the base are shaped in a complementary manner such that a right-hand flank of one formwork mates with a left-hand flank of the adjacent formwork, and so on. More preferably, the weight-reducing elements are configured so as to create, between two formworks arranged alongside each other, a longitudinal space which has dimensions such as to form a load-bearing joist, receiving the irons and stirrups which will be calculated according to the requirements.

The base of the formwork, according to one of the various optional aspects of the present invention, comprises an outer layer made of heat-insulating material, such as polystyrene. The presence of a heat-insulating layer is advantageous, in particular, for the construction of walls. The formwork according to the invention in fact may be proposed in a specific version for floors or in a specific version for walls.

Said radiating element is for example a coil (made of copper or other material) or more generally a circuit which is housed in the base of the formwork and can be connected to a normal air-conditioning plant.

The main advantage consists in the simultaneous construction of a floor (or wall) together with a radiating circuit having the advantages of low-temperature systems, but without floor coils. This results in the elimination of the need to lay a concrete covering layer, thereby reducing the thickness values by about 10 cm, with a consequent lower weight and lower costs, and greater living volume compared to a floor heating system. It should be noted that the radiating part forms part of the formwork (and therefore of the floor or wall) and does not require the application of external elements such as a false ceiling. Moreover, the radiating element contained in the formwork may also be connected to a cooling fluid circuit, if available, and act as an air-conditioning system, which is generally not possible with the conventional radiators.

The formwork according to the invention may also be used as an underfloor slab for supporting a covering layer. Said covering layer may be formed by tiles, parquet or other means. In particular, for use as an underfloor slab, the formwork may be made of concrete, but also polystyrene (polystyrol) or other material used in the building sector. The characteristic feature of radiating formwork, during use as an underfloor slab, also serves for carrying out the heating and/or cooling functions, which in this case are performed in the floor. The advantages achieved are the following: savings owing to the elimination of the conventional underfloor elements which are installed on-site; smaller thickness and consequent lower weight on the floor; shorter times, since it is not required to wait for drying of the screed (normally 28 days).

Another advantage consists in the low weight of the formwork which allows easy handling without the aid of site equipment.

With regard to the application to floors, the advantages below may be identified compared to the conventional techniques. Firstly the preparation work for laying the formwork is less complex, both owing to the low weight already mentioned above, and owing to the fact that the formwork may be made with a certain self-supporting capacity; simple section dividers, for example at intervals of about 1.5 m, are sufficient. Another major advantage consists in the smaller quantity of concrete and therefore smaller final weight of the floor, owing to the weight-reducing structures incorporated in the formwork. Basically it is possible to use a smaller thickness of concrete for the same load-bearing capacity, as well as a smaller amount of iron, owing to the weight-reducing structures which define the optimum spaces for the joists. Other advantages consist in simplification of the laying work, and savings in terms of materials and labour. It should be noted in particular that a formwork according to the present invention does not require highly specialized labour, which is greatly appreciated by construction companies.

With reference instead to the construction of walls, the following advantages may be listed:
- speed of laying and execution,
- lower installation costs,
- lower costs for additional works,
- cladding-type heat insulation already installed without additional costs and without specialized labour.

The characteristic features and advantages of the formwork according to the invention will become clear from the description below which illustrates a number of embodiments by means of non-limiting examples and the accompanying drawings.

### Brief description of the figures

Fig. 1 is a perspective view of a radiating formwork for pouring concrete floors according to one embodiment,
Fig. 2 shows an example of embodiment of a floor using formworks as shown in Fig. 1,
Fig. 3 shows a formwork according to the invention for the construction of a wall.

### Detailed description of a preferred embodiment

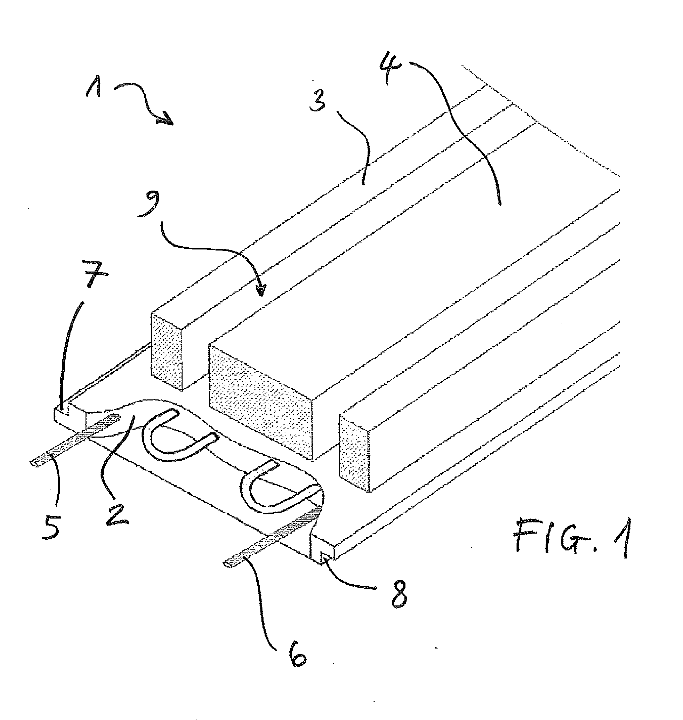

Fig. 1 shows a formwork 1 comprising: a base element 2 formed as a panel and longitudinal weight-reducing elements 3 and 4 which extend from the outer side of the base 2. Advantageously, the base 2 is made of lightened and suitably reinforced concrete; the weight-reducing elements 3 and 4 are for example made of polystyrene (commonly called "polystyrol").

The panel which forms the base 2 comprises internally at least one radiating element inside which a heating or cooling fluid (normally water) may circulate. Said radiating element is for example a coil embedded in the concrete of the base 2; the figure shows the inlet connection 5 and outlet connection 6, which allow the connection to an external circuit for supplying said fluid. The coil may be made of copper or other suitable material, also of a non-metallic nature (e.g. polyethylene or polybutadiene), more preferably with a diameter between 6 and 12 mm.

The base panel 2 also has suitable means for coupling with the base of another identical formwork, which in the example are represented by lateral flanks 7, 8 shaped in a complementary manner.

The weight-reducing elements define channels, such as the channel 9 shown in Fig. 1, intended to receive the reinforcing metalwork and the concrete casting. Extending from the panel 2, the weight-reducing elements reduce the volume of concrete and consequently the weight and costs, substantially for the same load-bearing capacity.

Advantageously, the coil is formed by sections, which are connected together and which extend along the weight-reducing zones.

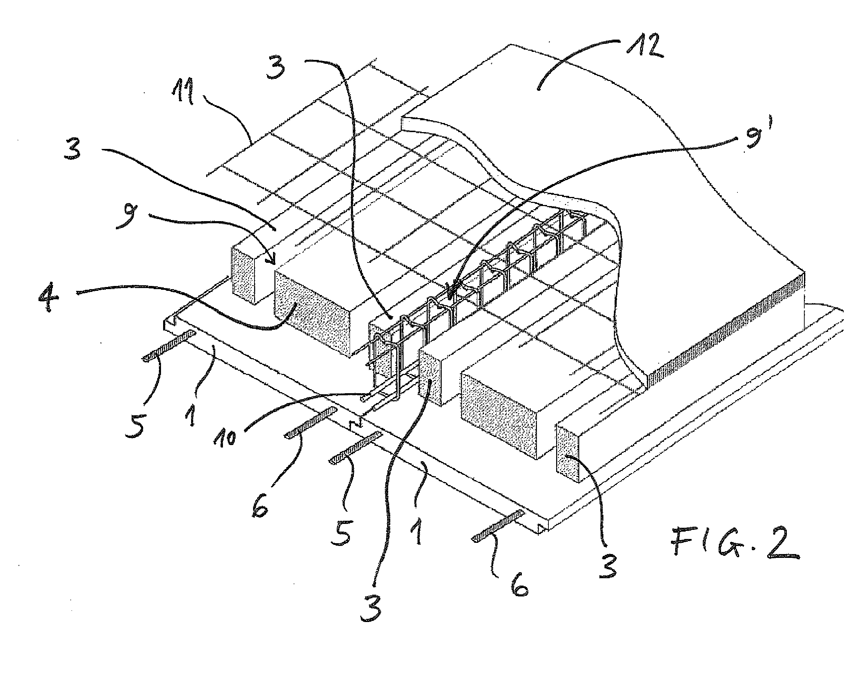

Fig. 2 shows two formworks 1 (of the type shown in Fig. 1) arranged alongside each other. It may be noted that a longitudinal space 9', which will form a load-bearing joist, is defined between the structures 3 of the two formworks. Fig. 2 also shows the following details: reinforcing ironwork 10, load distribution grid 11, concrete casting 12 which fills the longitudinal spaces 9 and 9' between the weight-reducing structures 3 and 4 and forms a slab. These details are not described further since they are known to a person skilled in the art; they may vary depending on the specific design, the loads, etc.

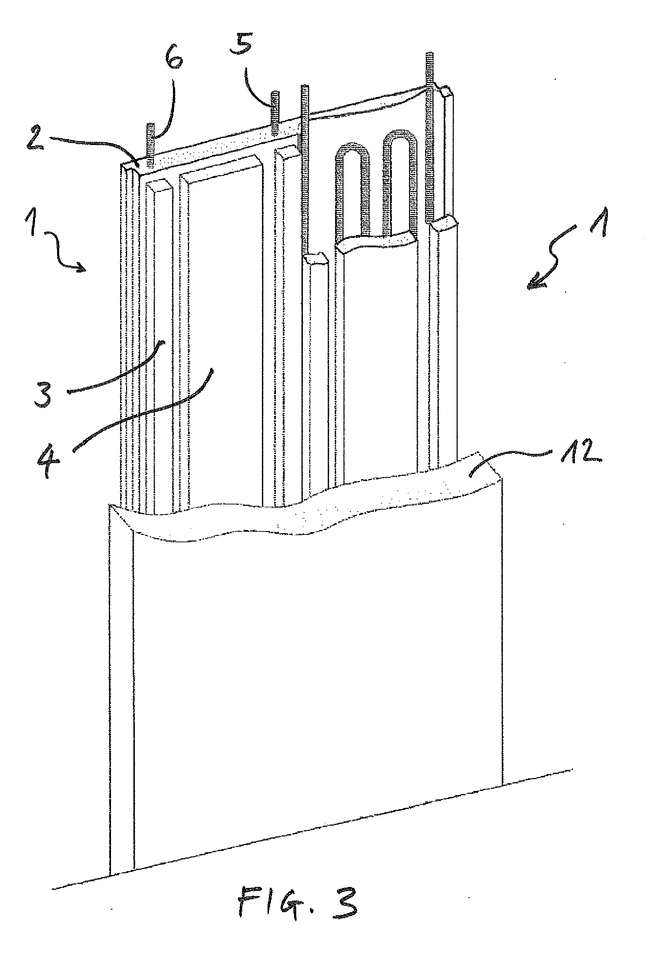

Fig. 3 shows an example of a formwork for the construction of walls. For the sake of simplicity the same reference numbers used in Figs. 1 and 2 are used to indicate the formwork 1, the panel 2, the weight-reducing structures 3 and 4, the connections 5, 6 for the heating or cooling fluid, and the concrete casting 12.

Another use of a formwork according to the invention consists in an underfloor slab. The formwork according to the invention may be used also as an underfloor slab for supporting any type of final covering layer such as tiles, parquets, etc. In this case the slab/formwork, which may be made using any material present in the building sector, with internally a radiating coil, serves for the heating and/or cooling functions which are performed in the floor.

## Claims

1. Modular formwork (1), in particular for pouring reinforced-concrete floors or walls, **characterized in that** it comprises:
- a base (2) formed as a panel;
- at least one weight-reducing portion (3, 4) which extends from the outer side of said panel-like base (2) and extends longitudinally along the formwork;
- and wherein the panel-like base (2) comprises internally at least one fluid-circulation radiating element (5, 6) which can be connected to a circuit for supplying a heating or cooling fluid.

2. Formwork according to claim 1, wherein said base (2) has the form substantially of a flat sheet.

3. Formwork according to claim 1 or 2, wherein said base (2) is made using one of the following materials: lightened and reinforced concrete, or polystyrene, or wood fibre.

4. Formwork according to claim 3, wherein the base is made of lightened and reinforced concrete with a weight of not more than 600 kg/m³.

5. Formwork according to any one of the preceding claims, wherein said at least one weight-reducing portion is made of expanded polystyrene (EPS).

6. Formwork according to any one of the preceding claims, having an approximate overall weight of 12 kg/m².

7. Formwork according to any one of the preceding claims, wherein said base (2) comprises joining means which are arranged laterally along the flanks of said base and which allow joining together with another identical formwork.

8. Formwork according to claim 7, wherein said joining means consist of shaped side edges (7, 8) of the panel-like base (2).

9. Formwork according to any one of the preceding claims, comprising weight-reducing portions (3, 4) which are formed such that, when the formwork is arranged alongside another identical formwork, a longitudinal space (9') suitably dimensioned to form a load-bearing joist is defined centrally between the two formworks.

10. Formwork according to any one of the preceding claims, wherein the base (2) comprises a sheet of heat-insulating material positioned on the outside or on the inner side.

11. Formwork according to any one of the preceding claims, wherein said at least one radiating element (5, 6) is a coil, and said coil comprises various sections which are connected together and which extend along said weight-reducing portions.

12. Formwork according to any one of the preceding claims, for use as an underfloor slab for a floor covering, resulting in a radiating floor for heating or cooling.
